# EUROPÄISCHE PATENTSCHRIFT

(11) **EP 1 966 477 B1**
(45) Veröffentlichungstag und Bekanntmachung des Hinweises auf die Patenterteilung: **02.02.2011**
(21) Anmeldenummer: 06829711.8
(22) Anmeldetag: 18.12.2006
(51) Int. Cl.: F02M 25/07, F02B 31/04, F02D 13/02

(54) **VERBRENNUNGSMOTOR MIT VERBESSERTER LADUNGSBEWEGUNG IM BRENNRAUM**
INTERNAL COMBUSTION ENGINE WITH AN IMPROVED CHARGING ACTION IN THE COMBUSTION CHAMBER
MOTEUR À COMBUSTION INTERNE À MOUVEMENT DE CHARGE AMÉLIORÉ DANS LA CHAMBRE À COMBUSTION

(30) Priorität: 22.12.2005 DE 102005061446
(43) Veröffentlichungstag der Anmeldung: 10.09.2008
(73) Patentinhaber: GM Global Technology Operations, Inc., Detroit, MI 48265-3000 (US)
(72) Erfinder: BUHR, Ronald, 55130 Mainz (DE); ZIMMERMANN, Jan, 55130 Mainz (DE)
(74) Vertreter: Kraenzmer, Martin
(86) Internationale Anmeldenummer: PCT/EP2006/012190
(87) Internationale Veröffentlichungsnummer: WO 2007/079922

(56) Entgegenhaltungen:
- EP-A- 1 234 965
- EP-A1- 0 537 745
- EP-A1- 1 207 288
- DE-A1- 19 808 574
- FR-A- 2 703 107
- GB-A- 2 328 975
- JP-A- 2003 328 793
- JP-A- 2005 307 774
- US-A1- 4 354 463
- US-A1- 4 494 504
- US-A1- 4 762 102
- US-A1- 2002 040 703
- US-B1- 6 318 348

## Beschreibung

Die Erfindung betrifft einen Verbrennungsmotor für ein Kraftfahrzeug.

Im Stand der Technik ist es bekannt, dass Zündungs- und Verbrennungsverhalten eines Verbrennungsmotors dadurch zu verbessern, dass die zugeführten Verbrennungsgase so in einen Verbrennungsraum in einem Zylinderkopf eingeleitet werden, dass darin eine gewünschte Schichtung entsteht. Die US 4 494 504 zeigt einen Verbrennungsmotor mit vier Ventilen je Zylinder, bei dem das Kraftstoff/Luft-Gemisch im Verbrennungsraum nahe der Zündkerze zum liegen kommt, bevor die Zündung erfolgt. Die US 4 762 102 lehrt dazu, eine Trennwand bzw. eine Maskierung in einem der Einlasskanäle vorzusehen, mit dem die in den Verbrennungsraum einströmenden Verbrennungsgase so umgelenkt werden, dass im Verbrennungsraum eine starke Wirbelbewegung entsteht.

Die EP 0 537 745 A1 zeigt ein Einlasssystem für einen Verbrennungsmotor, bei dem das einströmende Verbrennungsgas von einer Taumelströmung in eine Wirbelströmung übergeht.

Die EP 1 207 288 zeigt das Einströmen von Abgas aus dem Auslasskanal am Beginn des Kompressionstakts. Aus der US 6 318 348 ist das Ansaugen von Abgasen aus dem Auslasskanal während des Ansaugtaktes bekannt. Die GB 2 328 975 und die US 6 318 348 sehen dabei entsprechend geformte Kanäle vor, um den Gasen eine Drallbewegung mitzugeben. In der GB 2 328 975 sind zusätzlich Sperrvorrichtungen oder Ventile im Auslasskanal offenbart. Die DE 198 08 574 und US 4 354 463 erwähnen auf den Ventiltellern angebrachte Strömungshindernisse. Aus der US 4 354 463 ist auch bekannt, eine strömungsablenkende Wandung an der Öffnung des Auslasskanals anzubringen. EP 1 234 965 zeigt wiederum Einbauten auf der Oberfläche eines Kolbens. Dabei handelt es sich um eine Aussparung sowie eine Deflektorwand auf der Seite des Auslasskanals.

Die im Stand der Technik bekannten Verfahren zum Betreiben eines Verbrennungsmotors sind verbesserungsbedürftig, um den Kraftstoffverbrauch und den Schadstoffausstoß zu vermindern.

Die Aufgabe der Erfindung liegt darin, einen insofern verbesserten Verbrennungsmotor ein Verfahren zu dessen Betrieb und ein damit ausgerüstetes Kraftfahrzeug bereitzustellen.

Diese Aufgabe wird durch den Gegenstand der unabhängigen Patentansprüche gelöst. Vorteilhafte Weiterbildungen ergeben sich aus den jeweiligen abhängigen Patentansprüchen.

Der erfindungsgemäße Verbrennungsmotor hat eine Zylinderkopfanordnung mit üblicherweise vier Ventilen je Zylinder. Davon sind zwei Ventile als Einlassventile ausgebildet und die beiden anderen Ventile sind als Auslassventile ausgebildet. Je ein Ventilsitz stellt eine sichere Abdichtung zwischen dem Verbrennungsraum eines jeden Zylinders und den zugeordneten Einlass- und Auslasskanälen sicher. Bei dem erfindungsgemäßen Verbrennungsmotor sind ein erster Auslasskanal oder ein zweiter Auslasskanal so ausgebildet, dass sich bei einer Gasströmung vom Auslasskanal zurück in den Verbrennungsraum eine wenigstens teilweise drallartige Strömung im Verbrennungsraum ergibt.

Unter einer wenigstens teilweise drallartigen Strömung im Verbrennungsraum wird hier eine Strömung der Verbrennungsgase verstanden, die strudelförmig um die Mittelachse des Verbrennungsraums herum erfolgt, in der die Zündkerzenelektrode angeordnet ist. Dabei strömt die Gasströmung in etwa tangential in den Verbrennungsraum ein, so dass sie kreisförmig an den zylindrischen Seitenwänden des Verbrennungsraums umgelenkt wird, wenn man oben auf den Verbrennungsraum schaut.

Gemäß einem der Erfindung zugrunde liegenden Gedanken wird zur Verbesserung der Verbrennung im erfindungsgemäßen Verbrennungsmotor nach dem Ausstoßen der Verbrennungsgase ein Teil dieser Verbrennungsgase zusammen mit einem frischen Kraftstoff/Luft-Gemisch in den Verbrennungsraum eingesaugt. Dies erfolgt beispielsweise durch eine größere Ventilüberschneidung und kann durch Nockenwellen-Verstellung oder es kann durch eine elektrische oder hydraulische Ventilsteuerung bewirkt werden. Durch eine geschickte Steuerung der Strömungsrichtung der so in den Verbrennungsraum zurück gesaugten Verbrennungsgase kann eine gewünschte Schichtung von frischem Kraftstoff/Luft-Gemisch als Verbrennungsgas im Verbrennungsraum erzeugt werden.

Erfindungsgemäß wird die Strömung dabei so in den Verbrennungsraum eingeleitet, dass dort eine spiralförmige Strömung der zurückgesaugten Verbrennungsgase entsteht. Die Gase bestreichen dabei zumindest einen Teil der Außenwand des Verbrennungsraums, ohne dass sich in diesem Bereich erhebliche Verwirbelungen bilden. Die Gase nehmen dabei einen teilweise kreisförmigen Weg.

Dem Fachmann ist dabei aus dem Stand der Technik bekannt, wie Kanäle in einem Zylinderkopf ausgebildet werden müssen, damit ein durch einen solchen Kanal verlaufender Gasstrom im Inneren eines Verbrennungsraum eine gewünschte Richtung bzw. Umlenkung erfährt. Das Wissen hierzu aus dem Gebiet der Erzeugung von Gasstromwirbeln oder Gastaumelströmungen im Bereich der Einlasskanäle eines Zylinderkopfs kann unter Beachtung der geänderten Randbedingungen gemäß der Erfindung auf einen Gasstrom angewendet werden, der sich daraus ergibt, dass Verbrennungsgase aus einem Auslasskanal in den Verbrennungsraum zurückgesaugt werden. Erfindungsgemäß ist dabei in Betracht zu ziehen, dass der in dem Verbrennungsraum zurück gesaugte Gasstrom erheblich kleiner und eine geringere Menge darstellt, als dies bei einem Gasstrom am Einlasskanal eines Zylinderkopfs der Fall ist.

Die Erfindung kann selbstverständlich auch auf Verbrennungsmotoren mit drei Ventilen oder gar nur mit zwei Ventilen angewendet werden, von denen nur eines ein Auslassventil ist.

Im Bereich des Auslassventilssitzes bzw. der beiden beteiligten Auslassventilsitze ist erfindungsgemäß dabei wenigstens je eine Maskierungserhöhung im jeweiligen Auslasskanal vorgesehen sein, die als Ausbuchtung mit eingegossen werden kann. An einer solchen Wand werden Abgasströme umgelenkt, wie dies beispielsweise aus der US 4 6762 102 für einen Einlasskanal gezeigt wird. Die Wandungen der Maskierungserhöhung sind dabei so gestaltet, dass daran entlang streichende Gasströme vom Auslasskanal zurück in den Verbrennungsraum weg von der Mittelachse des Verbrennungsraums zur Seitenwand des Verbrennungsraums hin geleitet werden. Mit einer solchen Gestaltung lassen sich besonders einfach spiralförmige Gasströme erzeugen.

Gemäß der Erfindung kann auch am Einlasskanal eine Gestaltung vorgesehen werden, die eine wenigstens teilweise drallartige Strömung von frischen Verbrennungsgasen in den Verbrennungsraum erzeugt. Dabei kann eine solche Gestaltung an einem oder auch an zwei von insgesamt zwei Einlassventilen bzw. Einlasskanälen vorgesehen sein.

Gemäß der Erfindung kann mit einer Kombination von Einlasskanälen und Auslasskanälen, bei denen sich jeweils wenigstens teilweise drallartige Strömungen im Verbrennungsraum ergeben, wenn Verbrennungsgas eingesaugt wird, wie folgt gearbeitet werden. Zunächst ist es möglich, einen Verbrennungsmotor so auszubilden, dass sowohl die in den Verbrennungsraum einströmenden frischen Verbrennungsgase im Einlasskanal bzw. in den beiden Einlasskanälen als auch die in den Verbrennungsraum einströmenden zurück gesaugten verbrauchten Verbrennungsgase aus den Auslasskanälen jeweils einen gleich gerichteten Strudel erzeugen. In diesem Fall unterstützt die relativ kleine Gasströmung vom Auslasskanal zurück in den Verbrennungsraum die im Vergleich dazu relativ kräftige Gasströmung aus dem Einlasskanal, so dass sich ein Strudel um die Mittelachse des Verbrennungsraums herum ergibt. Dabei ist es möglich, dass die Gasströme so eingestellt werden, dass sich das noch unverbrannte Kraftstoff/Luft-Gemisch im Inneren des Verbrennungsraums befindet, wo die Elektrode der Zündkerze angeordnet ist. Das sich außen herum um diesen Bereich anlagernde, bereits verbrannte Verbrennungsgas stellt dann eine Isolierung für die sich anschließende Verbrennung des frischen Kraftstoff-/Luftgemisches dar. Dadurch lässt sich sowohl eine Reduktion von Stickoxyden im Abgas als auch ein verbesserter Wirkungsgrad erreichen.

Abweichend davon ist es auch möglich, die in den Verbrennungsraum einströmenden verbrauchten Verbrennungsgase so auf die in den Verbrennungsraum einströmenden frischen Verbrennungsgase in Form eines Kraftstoff-/Luftgemisches prallen zu lassen, dass eine Verwirbelung bzw. eine Taumelströmung entsteht. Damit lassen sich gewisse andere Effekte mit einer entsprechenden Beeinflussung der Verbrennung des frischen Kraftstoff-/Luftgemisches erzielen.

Bei Vierventilmotoren können die beiden vorstehend genannten Prinzipien auch kombiniert werden, indem zwei sich bezüglich der Mittelachse des Verbrennungsraums schräg gegenüberliegende Gasströme jeweils einen Wirbel in der selben Richtung erzeugen, während die beiden anderen Gasströme eine Taumelströmung erzeugen.

Die Erfindung ist auch in einem Kraftfahrzeug verwirklicht, in dem ein solcher Verbrennungsmotor mit einem erfindungsgemäßen Zylinderkopf eingesetzt wird. Das erfindungsgemäße Verfahren umfasst die vorstehend beschriebenen Einzelschritte. Zur Vereinfachung der Beschreibung wird dabei sowohl für die Mischung aus Kraftstoff und Verbrennungsluft als auch für die bei der Verbrennung entstehenden Produkte der Ausdruck "Verbrennungsgas" verwendet.

Durch die Erfindung wird der Kraftstoffverbrauch der betroffenen Verbrennungsmotoren reduziert und die Verträglichkeit gegenüber einem zurückgeführten Abgas erhöht. Die Erfindung stellt eine gesteigerte Ladungsbewegung bereit. Mit der Erfindung werden die Auslasskanäle zur Erzeugung einer zusätzlichen Ladungsbewegung genutzt. Dabei wird eine Maskierung und Formgebung der Auslasskanäle verwendet, wie sie oben stehend beschrieben ist.

Die Erfindung stellt eine Beeinflussung der Strömung der Einlasskanäle bereit, wobei eine Beeinträchtigung der Füllung des Verbrennungsraums in Abhängigkeit der jeweiligen Betriebszustände vermieden wird. Dies stellt gerade für solche Betriebszustände einen Vorteil dar, in denen keine erhöhte Ladungsbewegung benötigt wird. Eine solche erhöhte Ladungsbewegung wird insbesondere zur Steigerung der Verbrennungsstabilität bei der Zuführung von Rückgeführtem Abgas gewünscht.

Gemäß der Erfindung erfolgt die Abgasrückführung wenigstens teilweise durch eine spät verstellende Auslassnockenwelle, so dass durch die niedergehenden Kolben Abgas aus dem Auslasstrakt in den Brennraum zurückgesaugt wird.

Die Erfindung nutzt durch die Formgebung der Auslasskanäle diese zurückströmenden Abgase zur Steigerung der Ladungsbewegung. Insbesondere bei Motoren mit Nockenwellenverstellung und spätem Auslassschließen, d. h. Rückströmen aus dem Auslasskanal, kann mittels der erfindungsgemäß vorgeschlagenen Kombination der Auslasskanäle und gegebenenfalls zusätzlicher Maskierung durch Wandungen oder Ausbuchtungen in den Auslasskanälen die Ladungsbewegung weiter gesteigert werden.

Bei der erfindungsgemäß vorgesehenen Abgasrückführung über Auslassspätverstellung strömt das Abgas bei geringem Ventilhub über die Auslassventile. Wenn nun an einem der Auslassventile beispielsweise auf dem Ventilteller oder im Bereich der Auslassventile beispielsweise im Auslasskanal eine Maskierung bzw. eine Erhöhung oder Ausbuchtung angebracht ist, insbesondere durch einen erhöhten Anguss am Zylinderkopf, wird das Abströmen an der Ventilunterseite behindert, so dass ein größerer Massenstrom über die Oberseite des Ventils abströmt. Dabei ergibt sich eine drallartige Ladungsbewegung, die bei richtiger Wahl der Abschirmung bzw. Maskierung den vorhandenen Einlassdrall unterstützt.

Die Erfindung betrifft dabei insbesondere auch die Kombination von Maskierung und gezielter Formgebung der Auslasskanäle.

Ein Auslasskanal, der zur Drallerzeugung maskiert ist, erhält eine Kanalkontur, die eine Drallausbildung der Verbrennungsgase weiter unterstützt. Die Kanalform der Einlasskanäle von einem Drall erzeugenden Verbrennungsgasstroms kann dabei auf Auslasskanäle übertragen werden.

Durch die Maskierung beider Auslasskanäle lässt sich beim Rücksaugen eine Taumelbewegung erzeugen, die dann einer Einlasstaumelströmung entgegengesetzt ist.

Mit der Erfindung wird die Ladungsbewegung im Zylinder eines Verbrennungsmotors auf einfache Weise gesteigert. Die Verträglichkeit gegenüber zurückgeführtem Abgas steigt. Durch die damit mögliche Entdrosselung kann der Kraftstoffverbrauch gesenkt werden.

Die Erfindung nutzt durch die Formgebung der Auslasskanäle und gegebenenfalls unterstützt durch eine Maskierung das zurückströmende Abgas zur Erzeugung oder Verstärkung der Ladungsbewegung. Die Umsetzung der Erfindung kann durch die Änderung von Gussformen für die Auslasskanäle und gegebenenfalls für den Brennraum erfolgen.

Bei der Erfindung können die beiden Auslasskanäle so wie die Einlasskanäle in einen Drall- und einen Füllkanal unterteilt werden. Der Drallkanal wird dabei zur Zylinderwand hin gekrümmt und gegebenenfalls so ausgeführt, dass ein großer Anteil der Ladung über die Ventiloberseite abströmt. Hierfür wird der Kanal etwas flacher in den Brennraum geführt. Eine solche Charakteristik wird auch durch eine Maskierung der Unterseite des Ventils erreicht oder unterstützt. Der Drallkanal wird entsprechend entgegengesetzt ausgestaltet, also gerade zur Brennraummitte hin ausgerichtet und gegebenenfalls etwas steiler in den Brennraum hinein als der Füllkanal.

Bei derjenigen Variante, bei der durch die Maskierung beider Auslasskanäle ein Rücksaugen eine Taumelbewegung der beteiligten Gasströme erzeugt, die dann der Einlasstaumelströmung entgegengesetzt sind, ergeben sich mehrere sinnvolle Anwendungsmöglichkeiten. Insbesondere dann, wenn mit einem umgekehrten Taumeln bzw. mit einem "Reverse Tumble" gearbeitet wird, wie das bei manchen Dieselmotoren der Fall ist, kann der durch die Maskierung unterstützte Taumelzustand durch die zurückströmende Ladung erzeugt werden. Dieser unterstützt dann die Taumelbewegung der Einlassströmung. Auch eine umgekehrte Anordnung mit einer Taumelbewegung auf der Einlassseite und einer "Reverse Tumble" bzw. umgekehrten Taumelbewegung auf der Auslassseite ist möglich.

Die Erfindung ist in der Zeichnung anhand eines Ausführungsbeispiels veranschaulicht.
- Figur 1: zeigt einen Querschnitt durch einen erfindungsgemä- ßen Zylinderkopf im Bereich eines Zylinders eines Verbrennungsmotors und
- Figur 2: zeigt einen weiteren Querschnitt durch den Zylin- derkopf aus Figur 1.

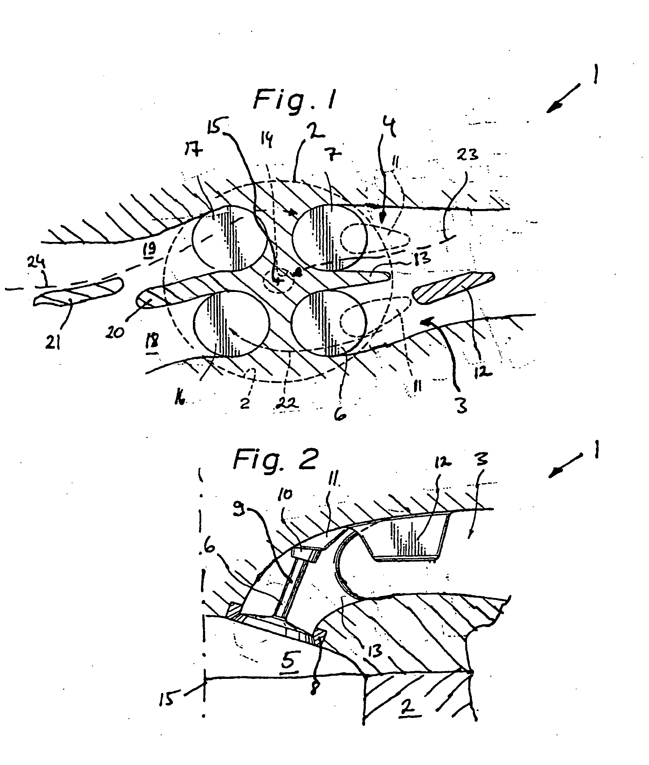

Figur 1 und Figur 2 zeigen Querschnitte durch einen erfindungsgemäßen Zylinderkopf 1 eines hier ansonsten nicht näher veranschaulichten Verbrennungsmotors. Die Querschnitte sind im Bereich eines Zylinders 2 vorgenommen, der in Figur 1 mit einer kreisrunden Strichlinie eingezeichnet ist.

Der Zylinderkopf 1 weist dabei einen ersten Einlasskanal 3 und einen zweiten Einlasskanal 4 auf, die im Bereich eines Verbrennungsraums 5 durch ein erstes Einlassventil 6 und durch ein zweites Einlassventil 7 verschlossen werden. Zur besseren Abdichtung sind hierzu Ventilsitze 8 vorgesehen, von denen in Figur 2 nur derjenige des ersten Einlassventils 6 eingezeichnet ist. An der Oberseite werden das erste Einlassventil 6 und das zweite Einlassventil 7 an ihrem Ventilschaft 9 von je einer Ventilführung 10 geführt. Die Ventilführungen 10 sind dabei in einer Ventilführungsaufnahme 11 im Zylinderkopf 1 geführt. Im Bereich des ersten Einlasskanals 3 ist eine Maskierungserhöhung 12 als von der Oberseite des ersten Einlasskanals 3 nach unten abstehendem Vorsprung vorgesehen. Eine Mittenwandung 13 trennt den ersten Einlasskanal 3 vom zweiten Einlasskanal 4.

Der Zylinderkopf 1 weist weiterhin eine Zündkerzenöffnung 14 auf, die in Figur 1 mit Strichlinie eingezeichnet ist. Die Zündkerzenöffnung 14 fällt dabei mit der Mittellinie 15 des Zylinders 2 und des Verbrennungsraums 5 zusammen.

Grundsätzlich ähnlich zum ersten Einlassventil 6 und zum zweiten Einlassventil 7 sind im Zylinderkopf 1 ein erstes Auslassventil 16 und ein zweites Auslassventil 17 vorgesehen. Diese sind in Figur 1 eingezeichnet. Das erste Auslassventil 16 trennt dabei einen ersten Auslasskanal 18 vom Verbrennungsraum 5 ab. Ebenso trennt das zweite Auslassventil 17 einen zweiten Auslasskanal 19 vom Verbrennungsraum 5 ab. Eine Mittenwandung 20 wiederum trennt den ersten Auslasskanal 18 vom zweiten Auslasskanal 19 ab. Im zweiten Auslasskanal 19 ist dabei eine Maskierungserhöhung 21 als von oben im zweiten Auslasskanal 19 nach unten abstehende Ausbuchtung eingeformt.

Im Betrieb verhält sich der erfindungsgemäße Zylinderkopf 1 wie folgt. Nach dem Verbrennungstakt wird in einem Ausstoßtakt das im Inneren des Verbrennungsraums 5 befindliche Verbrennungsgas durch das erste Auslassventil 16 und das zweite Auslassventil 17 in den ersten Auslasskanal 18 und in den zweiten Auslasskanal 19 ausgestoßen. Daraufhin beginnt der Ansaugtakt, in dem sich der Kolben im Zylinder 2 bei geöffnetem ersten Einlassventil und geöffnetem zweiten Einlassventil von seiner Stellung im oberen Totpunkt nach unten bewegt. Dadurch strömt frisches Brennstoff-/Luftgemisch in den Verbrennungsraum 5. Aufgrund der besonderen Gestaltung des ersten Einlasskanals 3 und aufgrund der Maskierungserhöhung 12 verläuft dabei der Verbrennungsgasstrom im ersten Einlasskanal 3 so wie mit dem Bewegungspfeil 22 eingezeichnet. Der Verbrennungsgasstrom 22 durchtritt das erste Einlassventil 6 und bewegt sich entlang des Umfangs des Zylinders 2 spiralförmig im Inneren des Verbrennungsraums 5, wie in Figur 1 dargestellt ist. Dadurch wird eine geschichtete Ladung von frischem Verbrennungsgas im Verbrennungsraum 5 bereitgestellt. Gleichzeitig bewegt sich frisches Verbrennungsgas im zweiten Einlasskanal 4 gemäß dem Bewegungspfeil 23 durch das zweite Einlassventil 7 hindurch in den Bereich der Zündkerzenöffnung 14. Dieser Verbrennungsgasstrom 23 tritt steiler in den Verbrennungsraum 5 ein als der Verbrennungsgasstrom 22.

Bei dem erfindungsgemäßen Verbrennungsmotor wird das zweite Auslassventil 17 zu Beginn des Ansaugtakts leicht geöffnet. Dies wird durch eine hier nicht veranschaulichte Nockenwellenverstelleinrichtung bewirkt. Das erste Auslassventil 16 bleibt während des gesamten Ansaugtakts vollständig geschlossen. Durch das leicht geöffnete zweite Auslassventil 17 wird verbrauchtes Verbrennungsgas aus dem Auslasstrakt zurück in den Verbrennungsraum 5 gezogen. Dies ist durch den Bewegungspfeil 24 veranschaulicht. Der aus dem Auslasstrakt angesaugte Verbrennungsgasstrom 24 nimmt dabei im Inneren des Verbrennungsraums 5 einen Weg, der ähnlich zum Weg des Verbrennungsgasstroms 22 ist, nämlich entlang des Umfangs des Zylinders 2 und in spiralförmiger Richtung. Durch den Verbrennungsgasstrom 22 wirkt die Anlagerung des Verbrennungsgasstroms 23 im Bereich der Zündkerzenöffnung 14 begünstigt. Es wird die erfindungsgemäße Schichtung im Verbrennungsraum 5 erreicht.

In einem weiteren hier nicht gezeigten Ausführungsbeispiel ist auch das erste Auslassventil 16 während des Ansaugtrakts geöffnet, so dass Verbrennungsgase aus dem ersten Auslasskanal 18 zurück in den Verbrennungsraum 5 strömen.

## Patentansprüche

1. Verbrennungsmotor eines Kraftfahrzeugs mit einer Zylinderkopfanordnung (1), wobei die Zylinderkopfanordnung (1) einen Verbrennungsraum (5) und im Verbrennungsraum (5) ein erstes Einlaßventil (6) in einem ersten Einlaßventilsitz (8) eines ersten Einlaßkanals (3) sowie ein erstes Auslaßventil (16) in einem ersten Auslaßventilsitz eines ersten Auslaßkanals (18) und
ein zweites Auslaßventil (17) in einem zweiten Auslaßventilsitz eines zweiten Auslaßkanals (19) aufweist,
wobei
der erste Auslaßkanal (18) und/oder der zweite Auslaßkanal (19) so ausgebildet sind, daß sich bei einer Gasströmung (24) vom ersten Auslaßkanal (18) zurück in den Verbrennungsraum (5) oder bei einer Gasströmung vom zweiten Auslaßkanal (19) zurück in den Verbrennungsraum (5) eine wenigstens teilweise drallartige Strömung im Verbrennungsraum (5) einstellt,
**dadurch gekennzeichnet, dass**
im Bereich des ersten Auslaßventilsitzes wenigstens eine erste als Ausbuchtung der Kanalwand mit eingegossene Maskierungserhöhung im ersten Auslaßkanal und/oder im Bereich des zweiten Auslaßventilsitzes wenigstens eine als Ausbuchtung der Kanalwand mit eingegossene zweite Maskierungserhöhung (21) im zweiten Auslaßkanal (19) vorgesehen ist,
und wobei
die Wandungen der ersten Maskierungserhöhung und/oder der zweiten Maskierungserhöhung (21) so gestaltet sind, daß daran entlangstreichende Gasströme (24) in Richtung vom ersten Auslaßkanal zurück in den Verbrennungsraum oder in Richtung vom zweiten Auslaßkanal (19) zurück in den Verbrennungsraum (5) weg von der Mittelachse (15) des Verbrennungsraums (5) zur Seitenwand (2) des Verbrennungsraums (5) hin geleitet werden,
wenn nach dem Ausstoßen von Verbrennungsgas aus einem oder mehreren Auslasskanälen (18, 19) des Verbrennungsraums (5) gleichzeitig mit dem Ansaugen von frischem Kraftstoff/Luft-Gemisch durch einen oder mehrere Einlasskanäle des Verbrennungsraums (5) Verbrennungsgas aus einem oder mehreren Auslasskanälen (18, 19) in den Verbrennungsraum (5) angesaugt wird,
so dass im Verbrennungsraum (5) eine Schichtung entsteht, bei der sich das noch unverbrannte Kraftstoff/LuftGemisch im Innern des Verbrennungsraums (5) befindet und bei der sich das bereits verbrannte Verbrennungsgas um diesen Bereich herum anlagert.

2. Verbrennungsmotor nach Anspruch 1,
**dadurch gekennzeichnet, dass**
der erste Einlaßkanal (3) so ausgebildet ist, daß sich bei einer Gasströmung (22) vom ersten Einlaßkanal (3) in den Verbrennungsraum (5) eine wenigstens teilweise drallartige Strömung im Verbrennungsraum (5) ergibt.

3. Verbrennungsmotor nach einem der vorhergehenden Ansprüche,
**dadurch gekennzeichnet, dass**
ein zweites Einlaßventil (7) in einem zweiten Einlaßventilsitz (8) eines zweiten Einlaßkanals (4) vorgesehen ist.

4. Verbrennungsmotor nach Anspruch 3,
**dadurch gekennzeichnet, dass**
wenigstens einer der beiden Einlaßkanäle (3) so ausgebildet ist, daß sich bei einer Gasströmung (22) von diesem Einlaßkanal (3) in den Verbrennungsraum (5) eine wenigstens teilweise drallartige Strömung (22) im Verbrennungsraum (5) ergibt und dass der bezüglich der Mittelachse (15) des Verbrennungsraums (5) schräg gegenüberliegende Auslaßkanal (19) so ausgebildet ist, daß sich bei einer Gasströmung (24) von diesem Auslaßkanal (19) zurück in den Verbrennungsraum (5) eine wenigstens teilweise drallartige Strömung (24) im Verbrennungsraum ergibt

5. Verbrennungsmotor nach einem der Ansprüche 1 bis 4,
**dadurch gekennzeichnet, dass**
sich bei der Gasströmung vom Auslaßkanal zurück in den Verbrennungsraum eine wenigstens teilweise als Taumelströmung ausgebildete Strömung im Verbrennungsraum ergibt.

6. Verbrennungsmotor nach Anspruch 5,
**dadurch gekennzeichnet, dass**
sich bei der Gasströmung vom Einlaßkanal in den Verbrennungsraum eine wenigstens teilweise drallartige Strömung und/oder Taumelströmung im Verbrennungsraum ergibt.

7. Kraftfahrzeug mit einem Verbrennungsmotor nach einem der Ansprüche 1 bis 6.

## Claims

1. An internal combustion engine of a motor vehicle, comprising a cylinder head arrangement (1), with the cylinder head arrangement (1) comprising a combustion chamber (5) and in the combustion chamber (5) a first intake valve (6) in a first intake-valve seat (8) of a first intake port (3) and a first exhaust valve (16) in a first exhaust valve seat of a first exhaust port (18) and a second exhaust valve (17) in a second exhaust valve seat of a second exhaust port (19), with the first exhaust port (18) and/or the second exhaust port (19) being arranged in such a way that an at least partly swirl-like flow is obtained in the combustion chamber (5) during a gas flow (24) from the first exhaust port (18) back to the combustion chamber (5) or during a gas flow from the second exhaust port (19) back to the combustion chamber (5), **characterized in that** in the region of the first exhaust valve seat at least one first masking elevation is provided in the first exhaust port, which first masking elevation is cast simultaneously as a protrusion of the port wall, and/or in the region of the second exhaust valve seat at least one second masking elevation (21) is provided in the second exhaust port (19), which second masking elevation is cast simultaneously as a protrusion of the port wall, and with the walls of the first masking elevation and/or the second masking elevation (21) being arranged in such a way that gas flows (24) moving along the same in the direction from the first exhaust port back to the combustion chamber or in the direction from the second exhaust port (19) back to the combustion chamber (5) are guided away from the central axis (15) of the combustion chamber (5) towards the side wall (2) of the combustion chamber (5) when combustion gas is drawn in from one or several exhaust ports (18, 19) into the combustion chamber (5) after the ejection of combustion gas from one or several exhaust ports (18, 19) of the combustion chamber (5) simultaneously with the drawing in of fresh fuel/air mixture by one or several intake ports of the combustion chamber (5), so that a stratification is produced in the combustion chamber, in which the as yet uncombusted fuel/air mixture is disposed in the interior of the combustion chamber (5) and in which the already combusted combustion gas will deposit around this region.

2. An internal combustion engine according to claim 1, **characterized in that** the first intake port (3) is arranged in such a way that an at least partly swirl-like flow into the combustion chamber (5) is obtained during a gas flow (22) from the first intake part (3) into the combustion chamber (5).

3. An internal combustion engine according to one of the preceding claims, **characterized in that** a second intake valve (7) is provided in a second intake valve seat (8) of a second intake port (4).

4. An internal combustion engine according to claim 3, **characterized in that** at least one of the two intake ports (3) is arranged in such a way that during a gas flow (22) from said intake port (3) into the combustion chamber (5) an at least partly swirl-like flow (22) is obtained in the combustion chamber (5), and that the exhaust port (19) which is disposed obliquely opposite with respect to the central axis (15) of the combustion chamber (5) is arranged in such a way that during a gas flow (24) from this exhaust port (19) back to the combustion chamber (5) an at least partly swirl-like flow (24) is obtained in the combustion chamber.

5. An internal combustion engine according to one of the claims 1 to 4, **characterized in that** a flow which is arranged at least partly as a tumbling flow is obtained in the combustion chamber during the gas flow from the exhaust port back to the combustion chamber.

6. An internal combustion chamber according to claim 5, **characterized in that** an at least partly swirl-like flow and/or tumbling flow is obtained in the combustion chamber during the gas flow from the intake port into the combustion chamber.

7. A motor vehicle with a combustion chamber according to one of the claims 1 to 6.

## Revendications

1. Moteur à combustion interne d'un véhicule à moteur avec un arrangement de culasse de cylindre (1), dans lequel l'arrangement de culasse de cylindre (1) comprend un espace de combustion (5) et dans l'espace de combustion (5) une première soupape d'admission (6) dans un premier siège de soupape d'admission (8) d'un premier conduit d'admission (3) et
une première soupape d'échappement (16) dans un premier siège de soupape d'échappement d'un premier conduit d'échappement (18) et
une deuxième soupape d'échappement (17) dans un deuxième siège de soupape d'échappement d'un deuxième conduit d'échappement (19),
dans lequel
le premier conduit d'échappement (18) et/ou le deuxième conduit d'échappement (19) sont conformés de telle façon qu'en cas de circulation de gaz (24) du premier conduit d'échappement (18) pour revenir à l'espace de combustion (5) ou en cas de circulation de gaz du deuxième conduit d'échappement (19) pour revenir à l'espace de combustion (5), il se crée une circulation au moins partiellement giratoire dans l'espace de combustion (5),
**caractérisé en ce qu'**il est prévu au niveau du premier siège de soupape d'échappement au moins une première surélévation de masquage dans le premier conduit d'échappement moulée dans la masse comme un creux dans la paroi du conduit et/ou au niveau du deuxième siège de soupape d'échappement au moins une deuxième surélévation de masquage (21) dans le deuxième conduit d'échappement (19) moulée dans la masse comme un creux dans la paroi du conduit,
et dans lequel les parois de la première surélévation de masquage et/ou de la deuxième surélévation de masquage (21) sont conformées de telle façon que les flux de gaz (24) qui passent dessus sont renvoyés du premier conduit d'échappement à l'espace de combustion ou du deuxième conduit d'échappement (19) à l'espace de combustion (5) en les éloignant de l'axe médian (15) de l'espace de combustion (5) vers la paroi latérale (2) de l'espace de combustion (5),
si, après l'éjection de gaz de combustion à partir d'un ou plusieurs conduits d'échappement (18, 19) de l'espace de combustion (5) en même temps que l'aspiration de mélange de carburant et d'air neuf par un ou plusieurs conduits d'admission de l'espace de combustion (5), du gaz de combustion est aspiré à partir d'un ou plusieurs conduits d'échappement (18, 19) dans l'espace de combustion (5),
de sorte qu'il se crée dans l'espace de combustion (5) une stratification dans laquelle le mélange de carburant et d'air non encore brûlé se trouve sur l'intérieur de l'espace de combustion (5) et le gaz de combustion déjà brûlé s'accumule autour de cette zone.

2. Moteur à combustion interne selon la revendication 1, **caractérisé en ce que** le premier conduit d'admission (3) est conformé de telle sorte qu'en cas de circulation de gaz (22) du premier conduit d'admission (3) vers l'espace de combustion (5), il se crée un écoulement au moins partiellement giratoire dans l'espace de combustion (5).

3. Moteur à combustion interne selon l'une des revendications précédentes, **caractérisé en ce qu'**il est prévu une deuxième soupape d'admission (7) dans un deuxième siège de soupape d'admission (8) d'un deuxième conduit d'admission (4).

4. Moteur à combustion interne selon la revendication 3, **caractérisé en ce qu'**au moins un des deux conduits d'admission (3) est conformé de telle chose qu'en cas de circulation de gaz (22) de ce conduit d'admission (3) vers l'espace de combustion (5), il se crée un écoulement (22) au moins partiellement giratoire dans l'espace de combustion (5) et **en ce que** le conduit d'échappement (19) situé en face en oblique par rapport à l'axe médian (15) de l'espace de combustion (5) est conformé de telle manière qu'en cas de circulation de gaz (24) revenant de ce conduit d'échappement (19) dans l'espace de combustion (5), il se crée un écoulement (24) au moins partiellement giratoire dans l'espace de combustion.

5. Moteur à combustion interne selon l'une des revendications 1 à 4, **caractérisé en ce qu'**en cas de circulation de gaz revenant du conduit d'échappement dans l'espace de combustion, il se crée un écoulement dans l'espace de combustion conçu au moins partiellement comme un écoulement oscillant.

6. Moteur à combustion interne selon la revendication 5, **caractérisé en ce qu'**en cas d'écoulement de gaz du conduit d'admission vers l'espace de combustion, il se crée un écoulement au moins partiellement giratoire et/ou un écoulement oscillant dans l'espace de combustion.

7. Véhicule à moteur avec un moteur à combustion interne selon l'une des revendications 1 à 6.
